# EUROPEAN PATENT APPLICATION

(11) **EP 3 865 678 A1**
(43) Date of publication of application: **18.08.2021**
(21) Application number: 21156632.8
(22) Date of filing: 11.02.2021
(51) Int. Cl.: F01D 21/04

(54) **FAN CASE FOR GAS TURBINE ENGINE AND ASSOCIATED METHOD OF USE**

(30) Priority: 11.02.2020 US 202016787737
(71) Applicant: Pratt & Whitney Canada Corp., Longueuil, Québec J4G 1A1 (CA)
(72) Inventor: CAULFEILD, Stephen, Longueuil, Québec J4G 1A1 (CA)
(74) Representative: Dehns

(57) **Abstract**

The fan case (23) can be used around a rotary fan (12) of a turbofan engine (10), the rotary fan (12) including a plurality of circumferentially interspaced blades (34) protruding radially from a rotor, the fan blade case (23) including a first annular wall (32) providing a radially outward delimitation to a gas path around the blades (34), the first annular wall (32) being configured to allow blade penetration therethrough while absorbing at least 30% of the kinetic energy in the event of detachment of one of said blades (34), and a second annular wall (36) surrounding the first annular wall (32), the second annular wall (36) configured to cooperate with the first annular wall (32) for containing the detachment of the fan blade (34).

## Description

The application relates generally to turbofan engines and, more particularly, to fan cases therefore.

### BACKGROUND

Aeronautics is a highly regulated industry, and aircraft engines are overdesigned by security margins, in a manner to account for even rare and unlikely circumstances. One such circumstance associated with turbofan engines is detachment of a portion of a fan blade from the rotor. Fan cases are typically designed in a manner to account for the unlikely event of fan blade detachment. While existing fan cases were satisfactory to a certain degree, there always remains room for improvement. In particular, drag, weight, reliability, and engine efficiency are persistent concerns of aircraft engine design.

### SUMMARY

According to an aspect of the present invention, there is provided a fan case for use around a rotary fan of a turbofan engine, the rotary fan including a plurality of circumferentially interspaced blades protruding radially from a rotor, the fan blade case including a first annular wall providing a radially outward delimitation to a gas path around the blades, the first wall being configured to allow blade penetration therethrough (optionally while absorbing at least 30% of the kinetic energy) in the event of detachment of one of said blades, and a second annular wall surrounding the first annular wall, the second annular wall configured to cooperate with the first annular wall for containing the detachment of the fan blade.

Optionally, and according to the above, the second annular wall includes at least one layer of fabric, and is configured to stretch radially outwardly and absorb a remaining kinetic energy of the detached blade.

Optionally, and according either or both of the above the second annular wall is a fabric wrap having a plurality of superposed layers of fabric in a polymer matrix.

Optionally, and according to any or all of the above, the first annular wall includes at least one layer of honeycomb material sandwiched between skins of one or more sheet-like material.

Optionally, and according to any or all of the above, the skins of sheet-like material are sheet metal layers.

Optionally, and according to any or all of the above, the second annular wall is configured to form a pocket once stretched radially outwardly, said pocket being designed for trapping the detached blade.

Optionally, and according to any or all of the above, the first annular wall is configured to allow blade penetration therethrough while absorbing at least 40% of the kinetic energy of the detached blade.

Optionally, and according to any or all of the above, the first annular wall is configured to allow blade penetration therethrough while absorbing at least 45% of the kinetic energy of the detached blade.

This aspect extends to a rotary fan for a turbofan engine comprising the fan case according to any or all of the above and a plurality of fan blades circumferentially interspaced blades protruding radially from a rotor.

This aspect also extends to a turbofan engine comprising the rotary fan according to the above.

Optionally, and according to any or all of the above, the first annular wall (32) is configured to allow blade penetration therethrough while absorbing at least 30% (or at least 40% or at least 45%) of the kinetic energy in the event of detachment of one of said blades at a redline + 1% RPM condition, wherein the detached blade includes at least 80% by weight of the blade prior to detachment.

According to another aspect of the present invention, there is provided a method of operating a turbofan engine comprising: a rotor rotating a fan of the turbofan engine, the fan having a plurality of circumferentially interspaced blades protruding radially from the rotor; one of said blades detaching from the rotor, and penetrating through a first annular wall surrounding the fan, said first annular wall absorbing at least 30% of the kinetic energy of the detached blade during detached blade penetration; said detached blade encountering a second annular wall surrounding said first annular wall subsequently to having penetrated through the first annular wall, said second wall cooperating with said first wall in absorbing kinetic energy of the detached blade.

Optionally, and according to the above, the method further comprises, upon said detached blade encountering the second annular wall, said second annular wall stretching radially outwardly in response to a push from the detached blade and absorbing the remaining kinetic energy of the detached blade.

Optionally, and according to either or both of the above, the stretching radially outwardly includes forming a pocket, further comprising said detached blade becoming trapped within said pocket.

Optionally, and according to any or all of the above, the first annular wall absorbs at least 40% of the kinetic energy of the detached blade.

Optionally, and according to any or all of the above, the first annular wall absorbs at least 50% of the kinetic energy of the detached blade

According to another aspect of the present invention, there is provided a turbofan engine comprising, in serial flow communication, a fan through which ambient air is propelled, a core engine including a compressor section, a combustor, and a turbine section, an annular bypass path in parallel with, and surrounding, the core engine, and a nacelle housing the engine, the nacelle having an inner wall delimiting the bypass path, an outer wall, and a cavity defined radially between the inner wall and the outer wall, the nacelle further comprising a fan case disposed around the fan, the fan having a plurality of circumferentially interspaced blades protruding radially from a rotor, the fan case including a first annular wall forming part of the inner wall around the fan, the first wall being made of metal and being configured to allow blade penetration therethrough while absorbing at least 30% of the kinetic energy in the event of detachment of one of said blades, and a second annular wall surrounding the first annular wall, the second annular wall configured to cooperate with the first annular wall for containing the detachment of the fan blade.

According to another aspect of the present invention, there is provided a turbofan engine comprising, in serial flow communication, a fan through which ambient air is propelled, a core engine including a compressor section, a combustor, and a turbine section, an annular bypass path in parallel with, and surrounding, the core engine, and a nacelle housing the engine, the nacelle having an inner wall delimiting the bypass path, an outer wall, and a cavity defined radially between the inner wall and the outer wall, the nacelle further comprising a fan case disposed around the fan, the fan having a plurality of circumferentially interspaced blades protruding radially from a rotor, the fan case including a first annular wall forming part of the inner wall around the fan, the first wall having at least one layer of honeycomb material sandwiched between sheet-like material layers and being configured to allow blade penetration therethrough while absorbing at least 30% of the kinetic energy in the event of detachment of one of said blades at a redline + 1% RPM condition, and a second annular wall surrounding the first annular wall, the second annular wall configured to cooperate with the first annular wall for containing the detachment of the fan blade, wherein the detached blade includes at least 80% by weight of the blade prior to detachment.

Optionally, and according to either of the above, the second annular wall includes at least one layer of fabric, and is stretchable radially outwardly to absorb a remaining kinetic energy of the fan blade as it stretches outwardly.

Optionally, and according to any or all of the above, the second annular wall is configured to form a pocket once stretched fully radially outwardly, said pocket being designed for trapping the detached blade until maintenance can be performed.

Optionally, and according to any or all of the above, the second annular wall is a fabric wrap consisting of a plurality of layers of carbon fiber fabric.

Optionally, and according to any or all of the above, the first annular wall is configured to allow blade penetration therethrough while absorbing at least 40% of the kinetic energy of the detached blade.

Optionally, and according to any or all of the above, the first annular wall is configured to allow blade penetration therethrough while absorbing at least 50% of the kinetic energy of the detached blade.

### DESCRIPTION OF THE DRAWINGS

Reference is now made to the accompanying figures in which:
Fig.1 is a schematic cross-sectional view of a gas turbine engine;
Fig.2A to 2D are enlarged cross-sectional views showing a fan case of a gas turbine engine, as a blade becomes detached from the fan, punctures a first wall, stretches a second wall, and becomes trapped within a pocket formed by the stretched second wall, respectively; and
Fig. 3 is a graph presenting the results of a computerized finite element analysis simulation where amount of kinetic energy of a detached blade is plotted together with softwall deflection against time.

### DETAILED DESCRIPTION

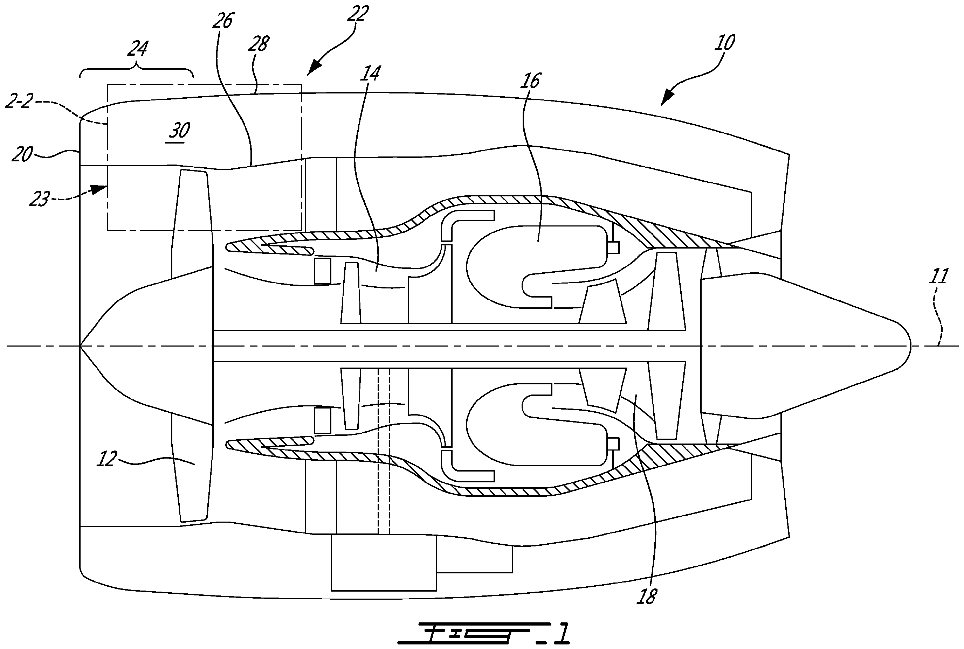

Fig. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The gas turbine engine 10 is housed in a nacelle 22, which has an aerodynamically shaped external surface designed to mitigate drag. In this example, the nacelle 22 forms an enclosure which is distinct from the passenger compartment of the aircraft, and more specifically, the nacelle 22 is separated from the passenger compartment by a portion of a wing of the aircraft (not shown). The area in which the blades of the fan 12 rotate can be referred to as the fan area. The portion of the nacelle 22 which surrounds the fan 12 can be referred to as a fan case 23.

The gas turbine engine shown in Fig. 1 is of the turbofan type, and is characterized by the fact that the gas path has a common intake region 24 upstream/in front of the fan 12, and then splits off, downstream of/behind the fan 12, into a radially-inner core gas path and a radially-outer bypass path. The core gas path extends through the compressor section 14, combustor 16 and turbine section 18, while the bypass path extends around the engine core, and guides air accelerated by the fan 12, typically for thrust. The bypass path is formed within the nacelle 22, more specifically between a bypass duct 26 and the engine core. The bypass duct 26 forms an internal wall of the nacelle 12, whereas the outer wall can be referred to as the outer shell 28. A cavity is formed between the bypass duct 26 and the outer shell 28. The fan case 23 is a portion of the bypass duct 26 surrounding the fan 12. One or more cavities 30 typically exist within the nacelle 22, between the bypass duct 26 and the outer shell 28.

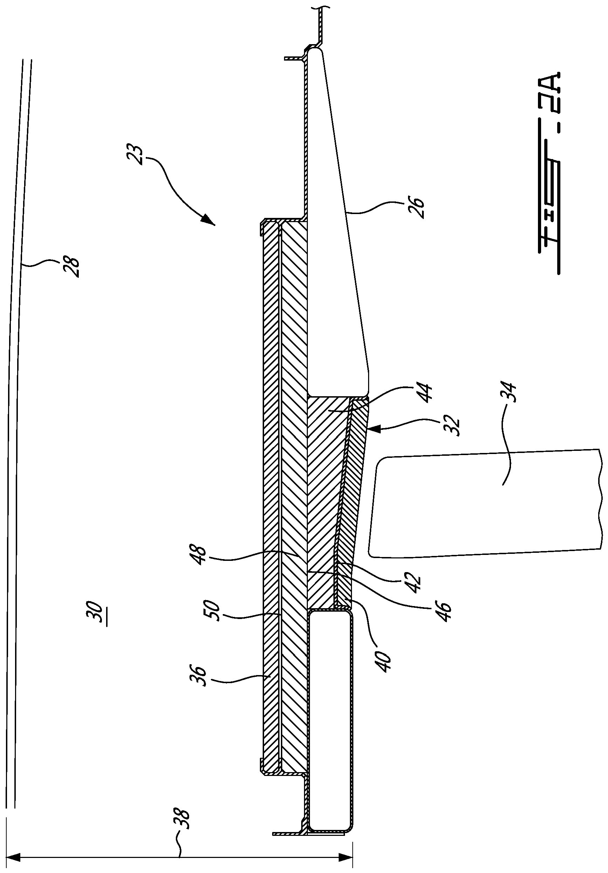

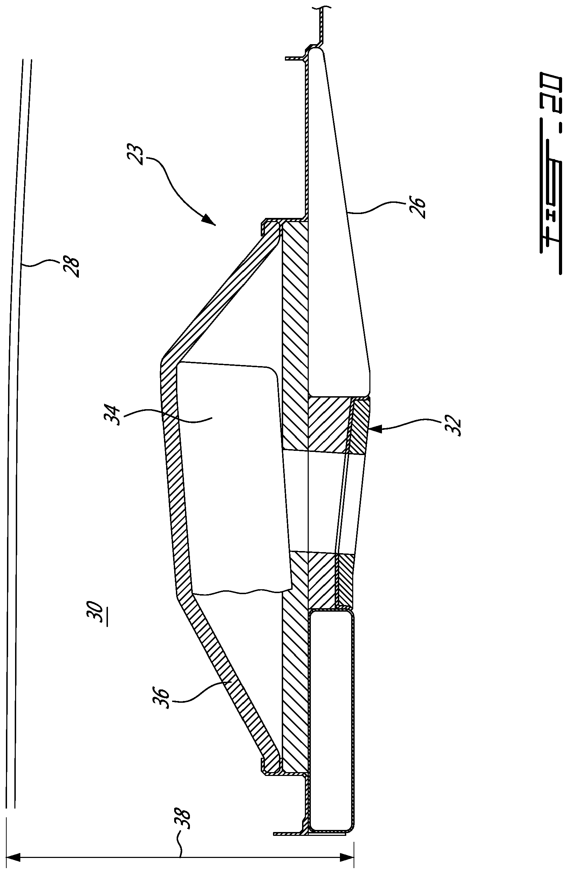

Fig. 2A shows an enlarged portion of a fan case 23, in accordance with one embodiment. Generally, the fan case 23 can be seen to have a first wall 32 which forms part of the bypass duct 26, and more specifically forms an outer delimitation to the gas path around the fan 12. Indeed, the bypass duct 26 can be formed of a plurality of segments assembled to one another along the length of the gas path, and in this case, the first wall 32 is provided in the form of one such segment, axially aligned with the fan 12. In the event of a fan blade detachment, the blade 34 will hit the first wall 32 before hitting anything else, and as will be discussed in greater detail further below, the first wall 32 is designed to allow its puncturing by the released fan blade 34, while absorbing a significant portion of its kinetic energy.

The first wall 32 can be a structural element, and can be referred to as a hardwall. To this end, the first wall 32 can include a honeycomb layer sandwiched between skins of sheet metal-like material, for instance, and can be a combination of honeycomb, sheet metal, fiberglass, adhesive, etc. In the specific embodiment illustrated, the first wall includes a first honeycomb layer 44 and a second honeycomb layer 48. A sheet metal layer 46 is used between the two honeycomb layers 44, 48 and can be adhered to the honeycomb layers 44, 48 by a suitable adhesive. A second sheet metal layer 50 can contribute to sandwich the honeycomb layer 48, and can be adhered to it with a suitable adhesive. An abradable segment 40 can be formed of a strong material and contribute to the energy-absorbing characteristics of the first wall 32. In this embodiment, the abradable segment 40 is received in a fiberglass tray 42 which serves as a skin which contributes to sandwich the honeycomb layer 44 and to this end, it can be adhered to honeycomb layer 44 with a suitable adhesive, and can also be adhered to the abradable segment 40. Various different embodiments are possible depending on the exact application. In different embodiments, the first wall 32 can be a sheet metal portion which can be thicker or not thicker than axially adjacent portions of the bypass duct, it can be continuous with the adjacent portions of the bypass duct, such as integrally machined or 3D printed therewith for instance, or distinct therefrom and assembled to the components forming the adjacent portions of the bypass duct such as by fastening, brazing or welding for instance. The first wall 32 can be a single sheet of metal for instance, and can form part of a support shell for a second wall.

Generally, the fan case 23 can also be seen to have a second wall, provided here in the form of a containment belt 36, which surrounds the first wall 32. More specifically, in this embodiment, the containment belt 36 is mounted to axially adjacent portions of the bypass duct via a support shell. The containment belt 36 can be designed in a manner to deform plastically and stretch while not yielding to the fan blade 34, as it absorbs some, or all of the remaining kinetic energy of the fan blade 34. In the illustrated embodiment, and as will be explained in relation with Figs 2A-2D to the containment belt 36 is designed to absorb virtually all the remaining kinetic energy of the fan blade 34, and to form, once deformed, a pocket into which the detached fan blade 34 remains trapped until maintenance can be performed to the engine. In an alternate embodiment, the second wall can be designed in a manner to absorb only a portion of the remaining energy of the fan blade 34. The containment belt 36 can be provided in the form of a fabric wrap, and can include a plurality of superposed layers of a fabric such as a carbon fabric for instance.

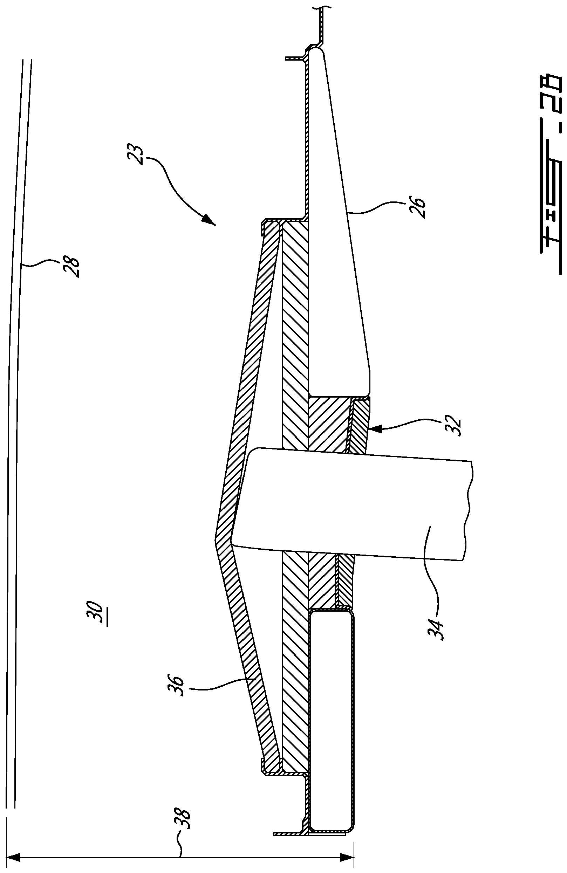

Referring sequentially to Figs. 2A to 2D, Fig. 2A shows the fan blade 34 at the moment where it structurally detaches from the rotor. At this moment, the centrifugal acceleration, which is normally compensated by the "pulling" action of the rotor, is set free from any restraint from the rotor, and as the blade 34 continues its tangential movement, it begins to accelerate in the radial orientation, to eventually pierce the first wall 32 and reach the second wall, such as shown in Fig. 2B.

In this embodiment, as shown in Fig. 2B, the second wall, provided in the form of a containment belt 36, begins to deform and stretch out radially, plastically, under the force exerted by the detached fan blade 34.

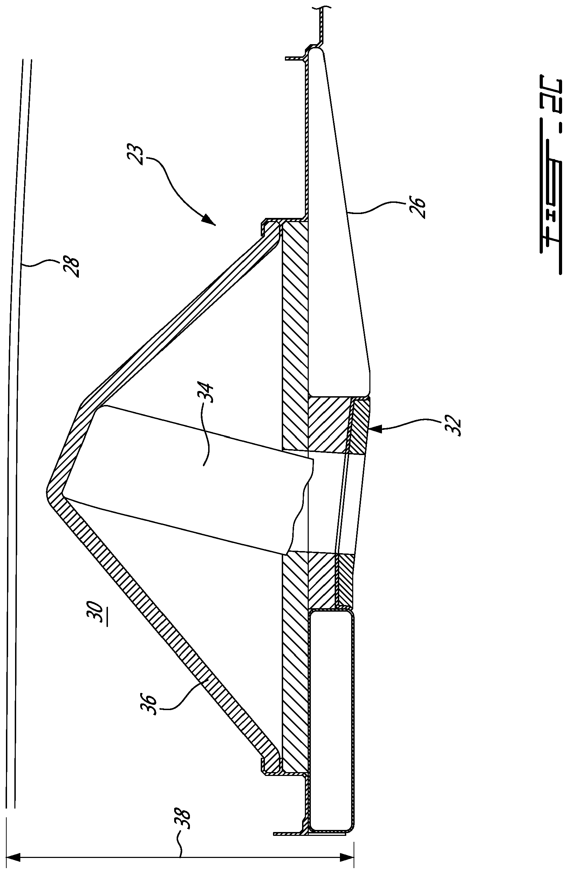

The fan case 23 can be designed in a manner for the containment belt 36 to stop deforming only once the entire length of the fan blade 34 has been accommodated (see Fig. 2C), at which point the fan blade 34 can tilt over and remained trapped inside the pocket formed by the plastically deformed containment belt 36.

Various materials can provide suitable deformability of the containment belt 36, but it can be preferred, for instance, to use a material which has a high plastic deformation capability before breaking, and some advanced fabric, such as some Kevlar or other carbon fiber fabrics used in composite matrices can be very well adapted for this type of function. The number of layers of fabric, the nature of the fabric fibers, and the of polymer matrix for the fibers can be selected in view of a specific embodiment. In some embodiments where the second wall is not designed to absorb all the remaining kinetic energy of the detached fan blade, a more rigid material, such as a metal for instance, may be preferred.

It will be understood that in an embodiment where the containment belt 36 is designed to deform and stretch into the nacelle cavity 30 as it absorbs all the remaining energy of the detached fan blade 34, a certain amount of radial thickness 38 is required to accommodate the radial energy-absorbing flexion of the containment belt 36. In a scenario where it is desired for the stretching to form a pocket into which the fan blade 34 becomes trapped, it may be desired to provide a greater amount of radial thickness 38, and a greater amount of radial deformability, to provide for the worst-case scenario, which can be when the fan rotates the fastest for instance (e.g. takeoff or climbing). However, increasing the radial thickness 38 between the bypass duct 26 and outer wall 28 of the nacelle 22 leads to a thicker nacelle, and a greater aerodynamic encumbrance, typically generating more drag, and potentially more weight, than a thinner nacelle. There is thus a competing need to reduce the amount of available radial thickness in typical embodiments.

Regulations govern the scenario of fan blade detachment. Indeed, at the time of filing this application, regulations in major jurisdictions required the fan case to resist fan blade detachment at redline +1% RPM. Redline RPM refers to the maximum permissible RPM for the engine, such as could occur, for instance, in heavy takeoff conditions. When a blade detaches, a portion of the blade may remain attached to the hub. American regulations require the fan case to contain fan blade detachment of at least 80% of the blade by weight. Other jurisdictions may require the fan case to contain a fan blade detachment of more than 80% of the blade by weight. Accordingly, in this specification, the expression "a detached blade" is used, for the sake of simplicity, in a manner to refer to a detached portion of a fan blade representing at least 80% of the blade's weight before detachment. For instance, the expression "a detached blade", can refer to a blade portion which becomes detached at the outermost surface of the flow path. The amount of kinetic energy of the detached blade varies significantly depending on the RPM and on the weight percentage of the blade which becomes detached. Accordingly, when reference is made to a percentage of the kinetic energy of a detached fan blade which is absorbed by a component or portion of the fan case, reference is made to the kinetic energy at redline + 1 RPM, for a portion of the fan blade which represents at least 80% of the fan blade by weight before detachment.

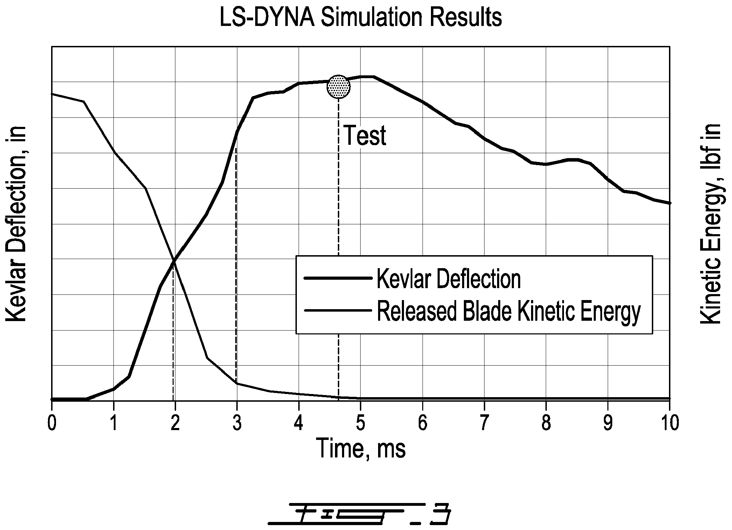

Before sending an engine to be tested, computer simulations are made. The computer simulations can include finite element analysis of virtual elements of the fan case's design, at the redline + 1% RPM, min 80% of fan blade by weight condition. Such simulations can be conducted using LS-DYNA software, for instance, as this was the industry standard code at the time of filing this specification. An example of possible results of a LS-DYNA simulation for absorption of kinetic energy by a softwall is shown in Fig. 3, where the softwall deflection and kinetic energy are plotted, partially inversely to one another, against time. Similar simulations can be performed to determine the amount of kinetic energy absorbed by the first wall, or by both the first wall and the second wall.

It was found that designing the first wall, i.e. the fan case wall which forms part of and is continuous with the bypass duct, in a manner to absorb a substantial amount, preferably more than 30%, more preferably more than 40%, and possibly more than 50%, and possibly even up to 60% or 75%, of the kinetic energy of the fan blade 34 as it is punctured by the fan blade 34, can reduce the amount of energy available to the fan blade 34 as it engages the second wall, such as a composite fabric (i.e. Kevlar) based belt 36 for instance, which can, in turn, reduce the requirement for radial cavity thickness 38 in the fan case area. This can lead to a lesser aerodynamic encumbrance and a lower amount of drag, for instance. Alternately, achieving this level of kinetic energy absorption by the first wall 32 can allow limiting the thickness of the second wall, such as the amount of layers of fabric in the containment belt 36 for instance, and may lead to a more efficient weight distribution than using a first wall 32 which absorbs less kinetic energy from the released blade 34. The amount of kinetic energy absorbed by the first wall 32 can be less than 75%, likely less than 60%. Indeed, at one point, if the amount of energy absorbed by the first wall 32 is high, it may become more convenient to go all the way, and design the first wall 32 in a manner to absorb 100% of the energy, thereby turning it into a hardwall design.

It will be understood that even though the example presented above refers to the detachment of a single blade, the fan case can be designed in a manner to contain detachment of two or more adjacent blades.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A fan case (23) for use around a rotary fan (12) of a turbofan engine (10), the rotary fan (12) including a plurality of circumferentially interspaced blades (34) protruding radially outward from a rotor of the rotary fan (12), the fan blade case (23) including a first annular wall (32) configured to allow blade (34) penetration therethrough while absorbing at least 30% of the kinetic energy in the event of detachment of one of said blades (34), and a second annular wall (36) surrounding the first annular wall (32), the second annular wall (36) configured to cooperate with the first annular wall (32) for containing the detachment of the fan blade (34).

2. The fan case (23) of claim 1, wherein the second annular wall (36) includes at least one layer of fabric, and is configured to stretch radially outwardly and absorb a remaining kinetic energy of the detached blade (34).

3. The fan case (23) of claim 1 or 2, wherein the second annular wall (36) is a fabric wrap having a plurality of superposed layers of fabric in a polymer matrix.

4. The fan case (23) of claim 1, 2, or 3, wherein the first annular wall (32) includes at least one layer of honeycomb material (44, 48) sandwiched between skins of one or more sheet-like material.

5. The fan case (23) of claim 4, wherein the skins of sheet-like material are sheet metal layers (46, 50).

6. The fan case (23) of any preceding claim, wherein the second annular wall (36) is configured to form a pocket once stretched radially outwardly, said pocket being designed for trapping the detached blade (34).

7. The fan case (23) of any preceding claim, wherein the first annular wall (32) is configured to allow blade penetration therethrough while absorbing at least 40% of the kinetic energy of the detached blade (34).

8. The fan case (23) of any preceding claim, wherein the first annular wall (32) is configured to allow blade penetration therethrough while absorbing at least 45% of the kinetic energy of the detached blade (34).

9. A method of operating a turbofan engine (10) comprising :
a rotor rotating a fan (12) of the turbofan engine (10) at a takeoff RPM regime, the fan (12) having a plurality of circumferentially interspaced blades (34) protruding radially from the rotor;
in response to one of said blades (34) detaching from the rotor, a first annular wall (32) absorbing at least 30% of the kinetic energy of the detached blade (34) while allowing penetration of the detached blade (34), and a second annular wall (36) surrounding said first annular wall (32) absorbing a remainder of the kinetic energy of the detached blade (34).

10. The method of claim 9 further comprising, upon said detached blade (34) encountering the second annular wall (36), said second wall (36) stretching radially outwardly in response to a push from the detached blade (34) and absorbing the remaining kinetic energy of the detached blade (34).

11. The method of claim 10, wherein said stretching radially outwardly includes forming a pocket, further comprising said detached blade (34) becoming trapped within said pocket.

12. The method of claim 9, 10, or 11, wherein said first annular wall (32) absorbs at least 40% of the kinetic energy of the detached blade (34).

13. The method of any of claims 9 to 12, wherein said first annular wall (32) absorbs at least 50% of the kinetic energy of the detached blade (34).

14. A turbofan engine (10) comprising in serial flow communication the fan (12) according to claim 1 through which ambient air is propelled, a core engine including a compressor section (14), a combustor (16), and a turbine section (18), an annular bypass path in parallel with, and surrounding, the core engine, and a nacelle (22) housing the engine, the nacelle (22) having an inner wall (26) delimiting the bypass path, an outer wall (28), and a cavity defined radially between the inner wall (26) and the outer wall (28), the nacelle (22) further comprising the fan case (23) according to any preceding claim disposed around the fan (12), the first annular wall (32) of the fan case (23) forming part of the inner wall (26) around the fan (12), the first annular wall (32) being configured to allow blade (34) penetration therethrough while absorbing at least 30% of the kinetic energy in the event of detachment of one of the blades (34) at a redline + 1% RPM condition, wherein the detached blade (34) includes at least 80% by weight of the blade (34) prior to detachment.

15. The turbofan engine (10) of claim 14, wherein the second annular wall (36) is a fabric wrap consisting of a plurality of layers of carbon fiber fabric.
